# EUROPEAN PATENT APPLICATION

(11) **EP 0 986 950 A1**
(43) Date of publication of application: **22.03.2000**
(21) Application number: 99810636.3
(22) Date of filing: 14.07.1999
(51) Int. Cl.: A01K 23/00

(54) **Nappy for dogs**

(30) Priority: 04.09.1998 CH 181298
(71) Applicant: Previtali, Andrea, 6535 Roveredo (GR) (CH)
(72) Inventor: Previtali, Andrea, 6535 Roveredo (CH)
(74) Representative: Fiammenghi-Domenighetti, Delfina

(57) **Abstract**

A nappy (22) for dogs is described which is designed to catch the dog excrement as the dog is defecating and which comprises:
- a container (18) for the excrement produced by the dog (30), which container has an opening and is removably fastened to a support harness (1) fitted on the body of the dog (30) such that the said opening in the container is positioned directly facing the anus of the said dog (30).

## Description

The present invention relates to the field of accessories and devices used for canine hygiene. More particularly, the device that forms the subject of the invention is useful in allowing dogs the freedom of being able to defecate without fouling the streets, pavements and parks and gardens in towns and cities, as is the case at the moment. In other words, it may be defined as a nappy for dogs.

The inventor has designed it so that it fits easily onto the dog's body without causing the dog any discomfort; furthermore, the nappy for dogs according to the invention is constructed such that it can be used without any risk of the dog owner accidentally getting his hands or clothes dirty.

This "nappy" consists of a container for the dog excrement, supported by a harness which fits onto the dog's body and holds the container in a position such that the dog excrement can fall into it and remain there at the very moment in which the dog defecates.

The subject of the present invention in practice consists of a nappy for dogs characterized by the characterizing part of the appended Claim 1.

A more detailed description of a preferred embodiment of a nappy for dogs according to the present invention will now be given, with reference also to the appended drawings in which:
- Figure 1 shows the plan view of a backpiece made of rubber or the like;
- Figure 2 shows the side view of a plastic ring which can be attached to the said backpiece in Figure 1;
- Figure 3 shows its front view;
- Figure 4 shows a longitudinal section through a cardboard ring which can be attached to the ring in Figures 2 and 3;
- Figure 5 shows its front view;
- Figure 6 shows the side view of a paper container for the dog excrement with a closure cord;
- Figure 7 shows its front view;
- Figure 8 shows the longitudinal section through a conical protective cover made of cardboard into which the container in Figures 6 and 7 is inserted;
- Figure 9 shows its front view;
- Figure 10 shows the front view of a cardboard ring to which the cord for closing the paper container shown in Figures 6 and 7 is attached;
- Figure 11 shows its front view;
- Figures 12 and 13 show elastic straps of various shapes which are used to fasten the elements of Figures 2 to 11 to the backpiece of Figure 1;
- Figure 14 shows the front view of a strip of paper which, once glued inside the conical protective cover in Figures 8 and 9, secures the latter to the ring in Figures 2 and 3, passing diametrically across it;
- Figure 15 shows a partially exploded view of all the elements illustrated in the previous figures, with some of these elements being shown in section;
- Figure 16 shows an exploded side view, in partial section, of a cylindrical press stud consisting of two coaxial parts which can be fastened together by pressing them together;
- Figure 17 shows an exploded front view of the two parts of the press stud in Figure 16;
- Figure 18 shows an exploded side view, in partial section, of all the elements illustrated in the previous figures, fitted onto a dog's body.

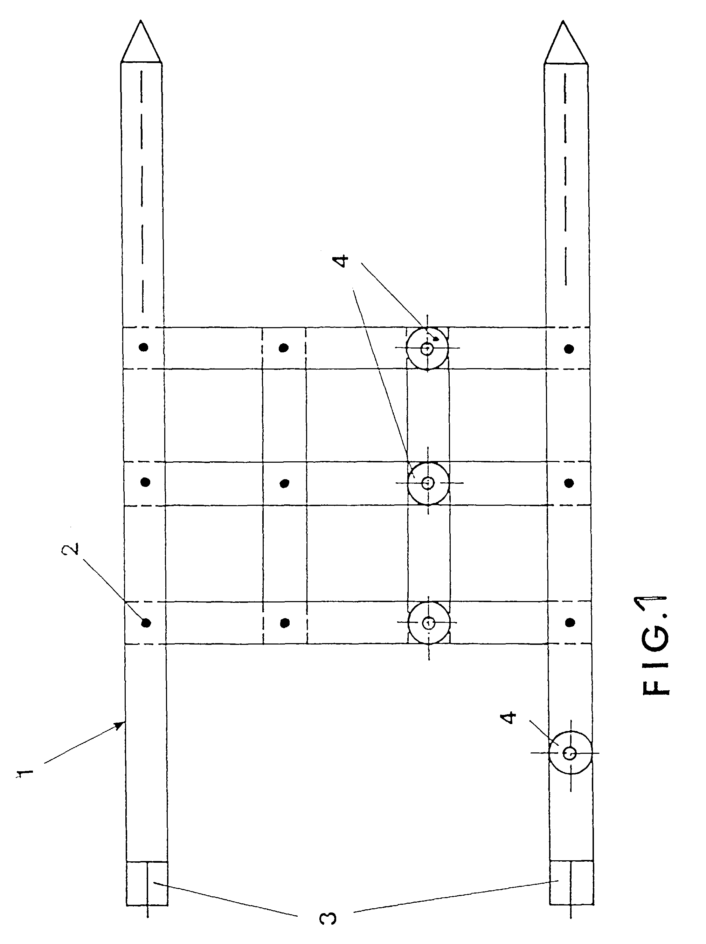

The nappy for dogs consists of eight elements fastened together. With reference to the figures it may be seen that, in Figure 1, the first element is formed by a "backpiece" 1 made of rubber, plastic or leather and held together by means of rivets 2.

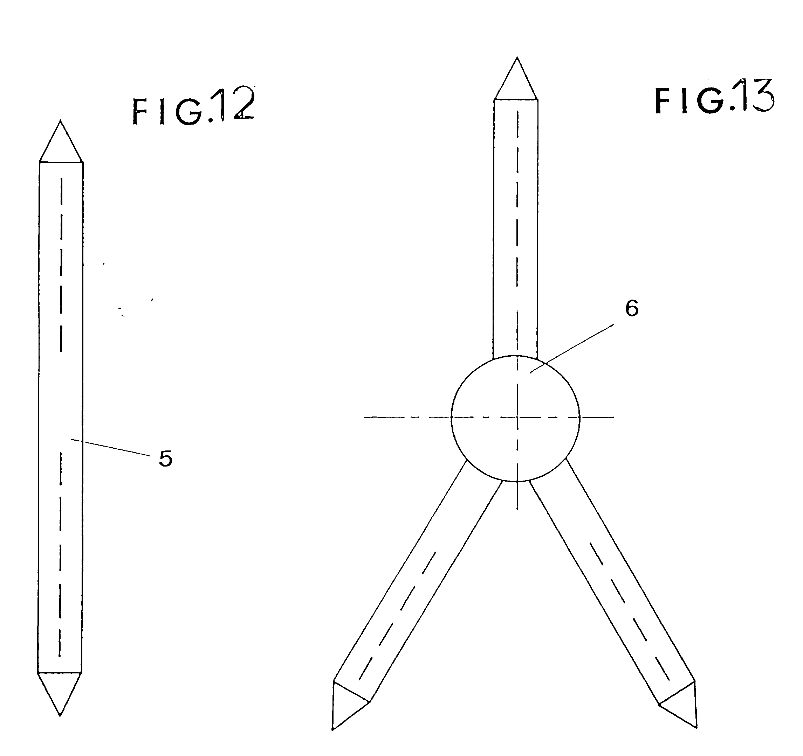

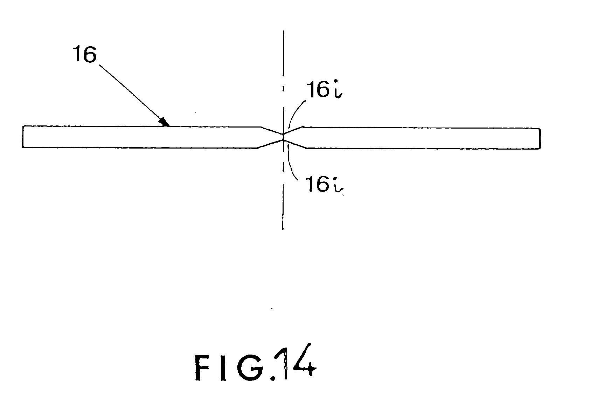

The backpiece is placed over the dog's back and fastened in a suitable manner by means of buckles 3. Its function is to support and position the other elements. To do this it has four cylindrical metal press studs 4 which act like clips onto which a second element is attached by means of elastic straps 5, 6 (see Figures 12 and 13).

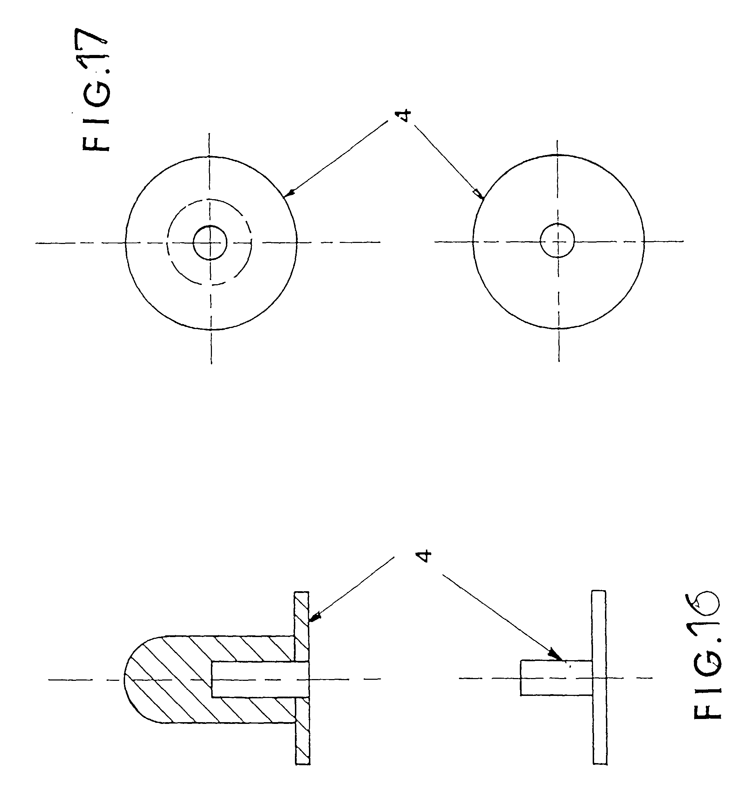

The backpiece has holes in which the four press studs 4 are mounted, the latter being already predisposed for mounting by means of pressure, consisting as they do of two parts designed to be joined together by pressing them together (see Figures 16 and 17).

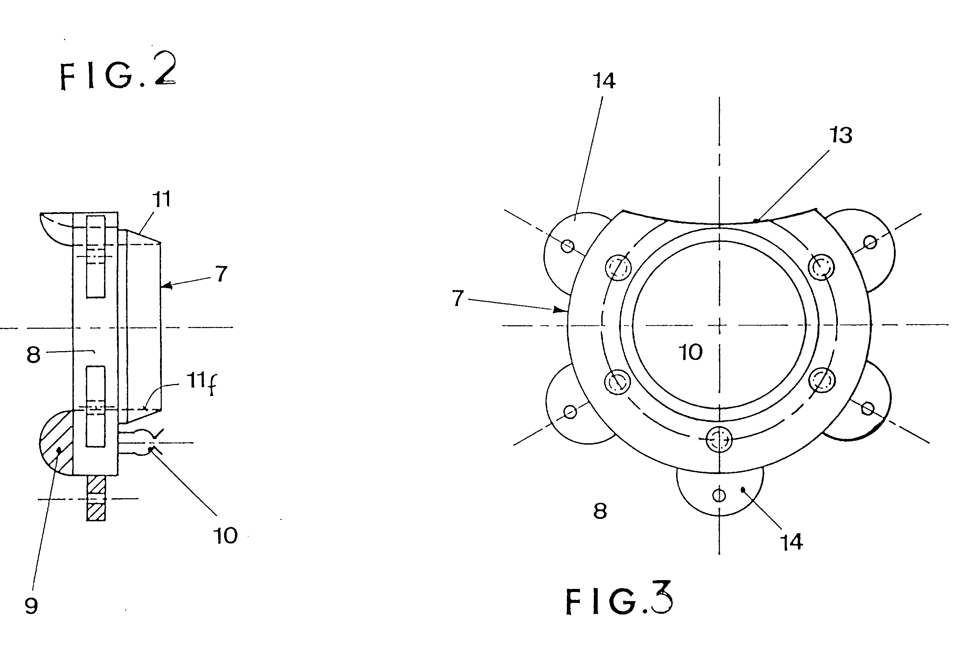

The second element 7 (Figures 2 and 3) consists of a ring 8 of rigid plastic with a hemispherical pad 9 made of soft rubber 9 attached to one side. The purpose of this pad 9 is to stop the ring 8 from rubbing on the dog's rear, enabling the said ring to remain always in the correct position.

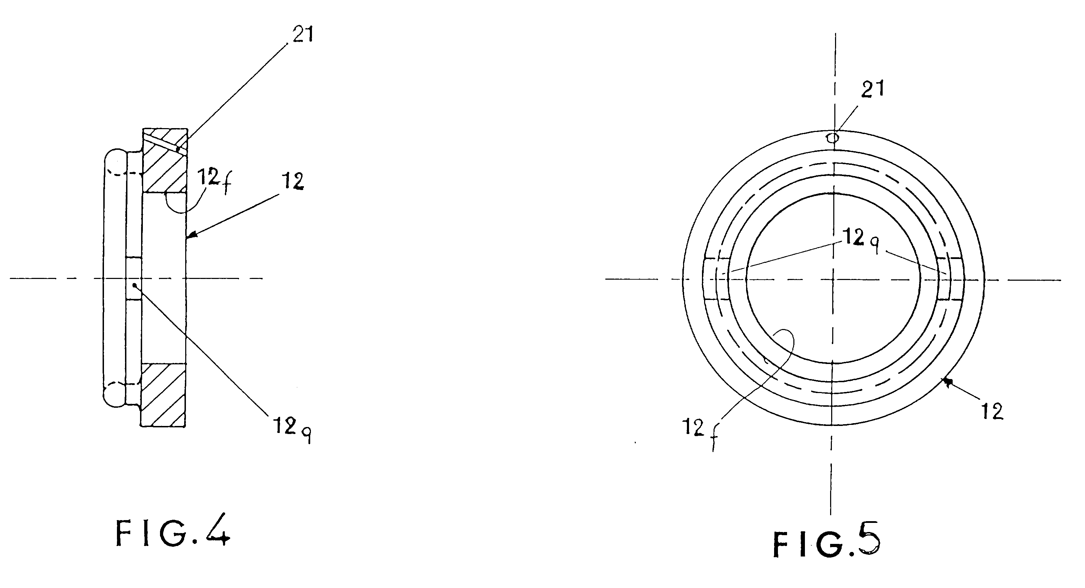

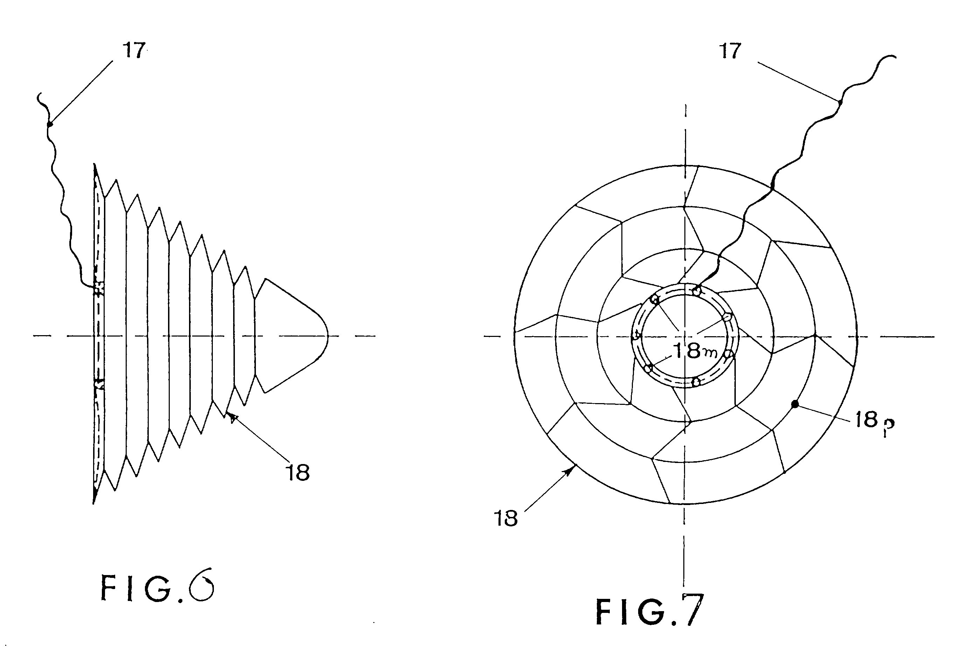

Mounted on the other side, in holes expediently made on one side of the ring, are suitable plastic spring clips 10 arranged in a circular pattern. These clips enable the second element 7 to hook up with the third element described below (see Figures 4 and 5).

On this side there is also a peripheral rim 11 which tapers slightly over a depth such that, during mounting, the second and third elements fit together perfectly. The central hole of the ring 8 must be of a size suited to the anus size of different breeds of dog. Also, the outermost part of the rim located under the dog's tail has a semicircular taper 13 which allows the tail greater freedom of movement.

The larger outermost rim of the ring 8 also has semicircular projections 14 (tabs) with a hole in the middle in which metal press studs identical to the ones 4 associated with the first element 1 can be mounted (these press studs are more clearly illustrated in Figures 16 and 17).

Attaching the ring 8 and placing it in the correct position is done by means of the said elastic straps 5, 6 of Figures 12 and 13 which are attached to the metal press studs 4 of the first 1 and the second 7 elements. In order for the ring 8 to be in exactly the right position with respect to the dog's bottom, so enabling the dog to walk and to move his tail in a natural manner, the soft rubber pad 9 must be anatomically shaped with respect to the variously shaped rear ends of different breeds of dog.

A modification will have to be made to the ring 8 of the second element in order to allow bitches to urinate more easily.

Such a modification would take the form of a semicircular taper made diametrically opposite the first taper 13 which has been made in order to allow the tail greater freedom of movement.

Such a modification would also affect the attachment "tabs" 14. In practice, the tab 14 and the spring clip 10 (split closure) located vertically below the first semicircular taper would be omitted. (This modification has not been shown in the drawings).

The two elastic straps 5, 6 (Figures 12 and 13) already mentioned previously will be used to attach the element 7 to the element 1.

The third element consists of a cardboard ring 12 (Figures 4 and 5). The diameter of the central hole 12f of this element is the same size as the diameter of the central hole 11 of the ring 7 of the second element 8.

That part of the ring 12 having the smaller external diameter has a shape complementary to that of the plastic spring clips 10 found on the second element. The third element can thus be joined to the second element 7 by means of these spring clips.

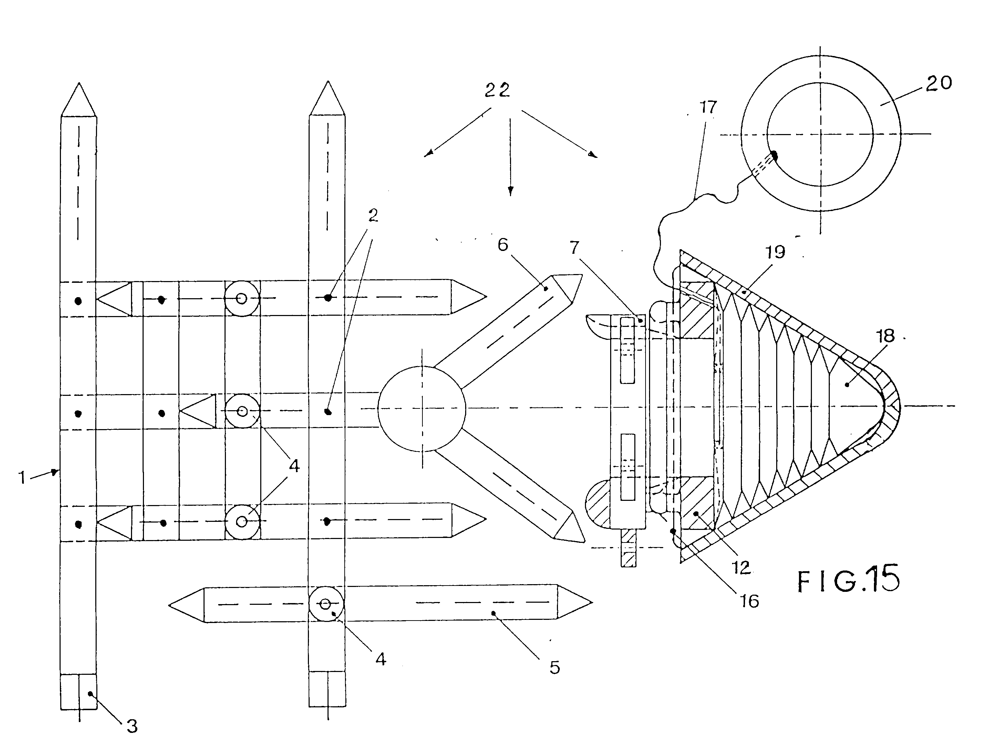

The part with the smaller external diameter also has two holes (slots) 12q which are large enough to allow a strip of paper 16 (Figure 14) to pass, this strip passing through both holes.

That part of the ring 12 having the larger external diameter has a through hole 21 with a diameter of 2-3 mm in order to allow the passage of a cord 17 of a container 18 shown in Figures 6 and 7.

The fourth element consists of a conical container 18 made of paper. This element is manufactured so that the container has a minimum and maximum extension (concertina-style) . This feature allows the container 18 to open automatically and fully, enabling it to contain the excrement in an extremely effective manner.

Pulling on the said cord 17 hermetically closes the opening to the container 18. A sheet of plastic (polyethylene) 18p has been provided at the entrance to the opening. This sheet is in the form of a ring, the external edge of which is glued to the external edge of the paper container 18.

The cord 17 is inserted along the internal edge of the sheet, through suitable holes 18m made in the plastic sheet 18p (a system similar to that used in refuse sacks).

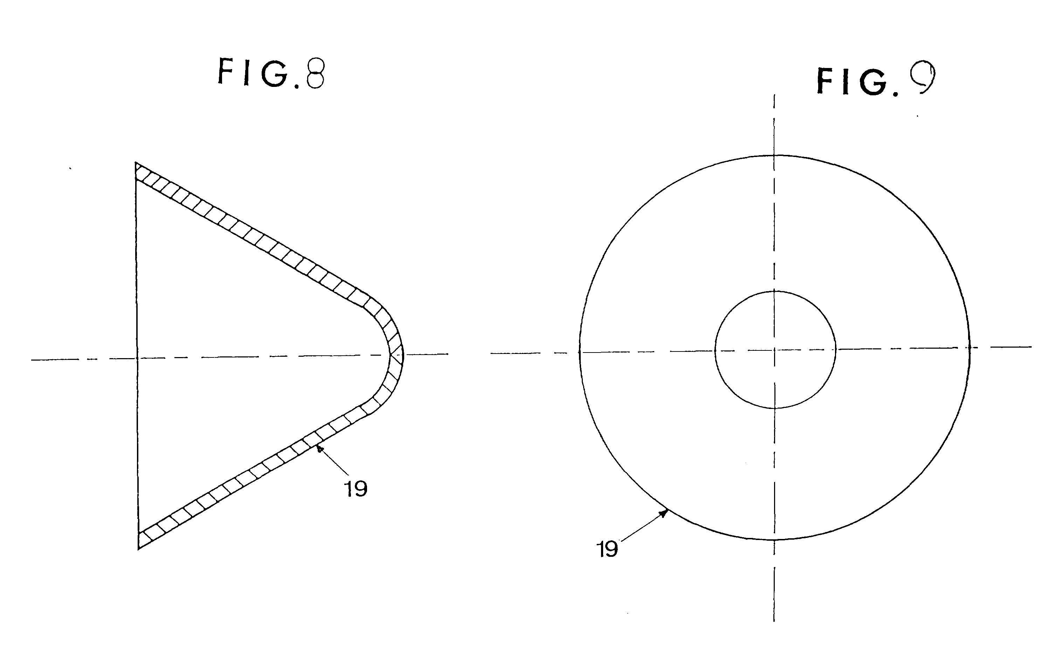

The fifth element consists of a cardboard cone 19 (Figures 8 and 9) which is large enough to encase the said second and third elements, so as to form a single unit (cartridge). The tip of the cone forming the paper container 18 (fourth element) is glued to the internal end of the cone 19. This element 19 covers up the elements 7, 12, 18 and makes it easier for the container 18 to open out once the mechanism has been activated.

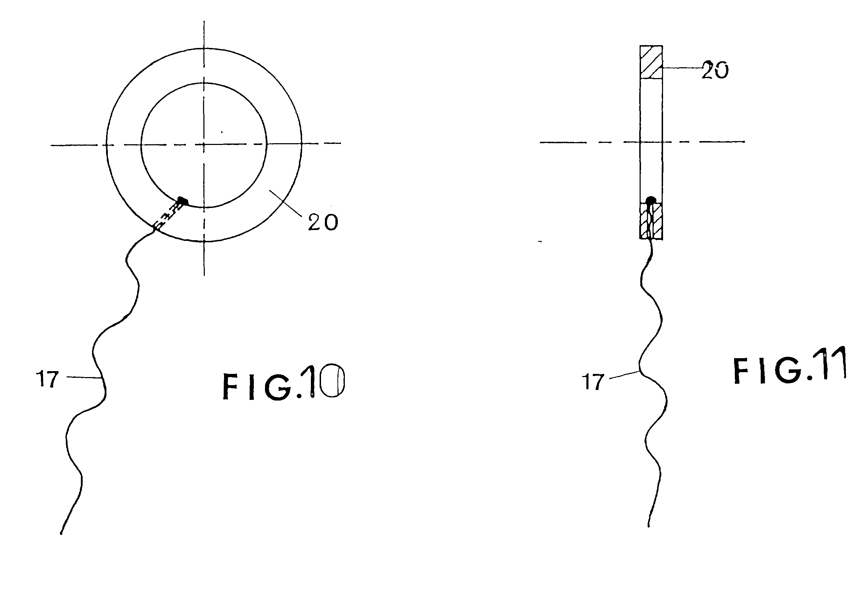

The sixth element consists of a cardboard ring 20 (Figures 10 and 11) which enables the closure cord 17 of the paper container 18 to be gripped. This element is formed by gluing together two cardboard rings. Before gluing these two cardboard rings together, the closure cord 17 of the container 18 first needs to be placed between them, once it has first been threaded through the said 2-3 mm diameter hole 21 in the element 12.

The seventh element consists of four elastic straps which are used to fasten and position the second element 7 which, once in position, should have its central hole located directly facing the centre of the dog's anus.

In practice the seventh element is made up of two types of elastic straps 5, 6 (Figures 12 and 13). They include ordinary elastic straps 5, of which one is positioned under the dog's belly and two are positioned one either side. They also include a Y-shaped elastic strap 6 which is positioned so that one strap lies on the dog's back and the other two straps lie symmetrically with respect to the appropriate tabs 14 at the top of the element 7 as described.

The Y shape of this elastic strap has been chosen so as to allow the dog to wag its tail. The four elastic straps 5, 6 are fastened to the harness by means of the cylindrical press studs 4 found on the element 1 and the element 7.

The eighth element consists of a strip of paper 16, the central section of which is weakened by two triangular notches 16i made on either side (Figure 14). These cuts enable the strip of paper 16 to break more easily when pressure is exerted on it by the dog excrement.

Roughly one centimetre of a first end of the strip 16 needs to be glued to the internal surface of the cone 19. The second end of the strip is then threaded through the holes 12q (slots) in the cardboard ring 12 and also glued to the internal surface of the cone 19, exactly 180 degrees from the first end. This strip acts as a connecting element between the cardboard ring 12 and the protective cardboard cone 19 containing the paper container 18 and forming a single unit (cartridge) which will be replaced once it has been used. Moreover, as it breaks under the pressure exerted by the dog excrement, the said strip 16 also releases the paper container 18, thus allowing the dog to defecate correctly.

The advantage of this nappy 22 for dogs, in addition to that of helping to keep the streets, pavements and urban parks clean, lies in the fact that it frees dog owners from the unpleasant task of having to scoop up their dogs' excrement.

As far as the inventor is aware, in the current state of the art the only system designed to scoop up dog excrement requires the use of a scoop, with the owner then having to deposit the said excrement in special bins. Attempts were made in Holland to introduce special dog toilets, but proved unsuccessful.

The subject of the invention is useful in helping to keep our streets, pavements and public parks and gardens clean since the dog excrement is held in the special paper container and subsequently disposed of by the dog's owner. It is also advantageous from the ecological viewpoint since the cartridge, which is replaced after each use, is made from biodegradable materials (paper, cardboard, cord).

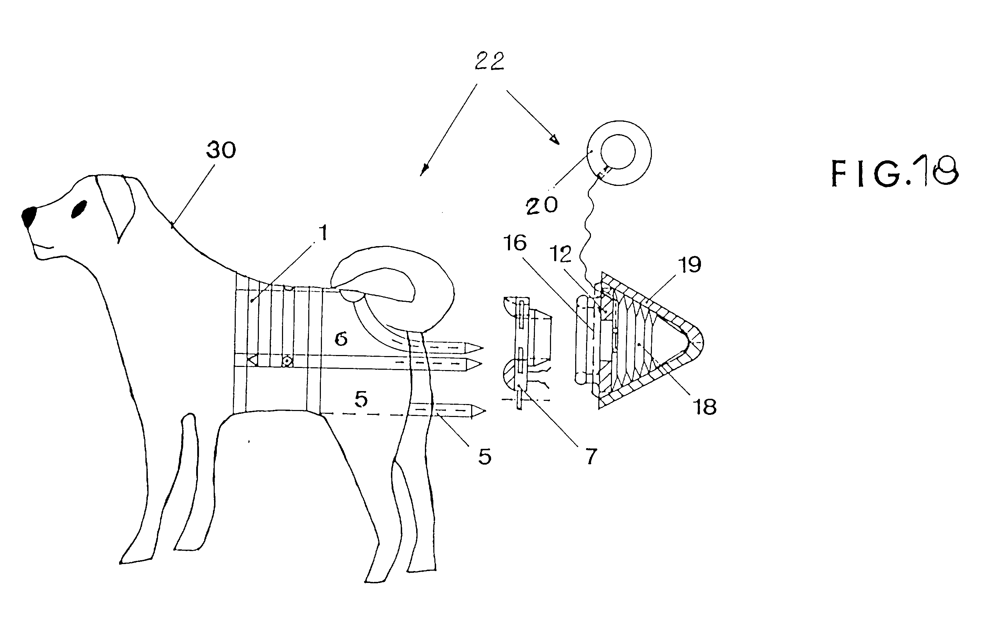

All the elements that make up a nappy 22 for dogs according to the invention are more clearly illustrated in Figures 15 and 18. (The latter also shows a dog 30 wearing the nappy 20).

Needless to say, the exemplary embodiment described above and illustrated in the figures is neither binding nor limiting with respect to other possible embodiments that may be obtained by a person skilled in the art by implementing the teachings in Claim 1 appended hereto.

More specifically, different materials may be chosen for all the individual components, or a different type of means may be chosen for fastening the various parts together, for closing the mouth of the container or for constructing the container itself, which can either be flexible with a rigid casing or rigid per se. The shape of the various parts may also vary, depending on the most diverse design and practical requirements.

## Claims

1. Nappy (22) for dogs designed to catch the dog excrement as the dog is defecating, characterized in that it comprises:
• a container (18) for the excrement produced by the dog (30), which container has an opening and is removably fastened to a support harness (1) fitted on the body of the dog (30) such that the said opening in the container is positioned directly facing the anus of the said dog (30).

2. Nappy for dogs according to Claim 1, in which means (18p, 18m, 17, 20), which can be operated manually in order to close the container, are attached to the opening of the said container (18).

3. Nappy (22) for dogs according to either of Claims 1 or 2, characterized in that it comprises:
• a support harness (1) which can be fitted onto the body of the dog (30);
• a protective cover (19) which is open at one of its ends;
• a container (18) made of flexible material and having at least one opening, the container being shaped such that it can be housed and fixed inside the said protective cover (19) with its opening superimposed over the opening of the latter (19);
• closure means (18p, 18m, 17, 20) which can be operated manually in order to close the said opening in the container (18) made of flexible material;
• fastening means (5, 6, 7, 16, 16i, 12, 12q) designed to attach the unit made up of the said protective cover (19) housing the said container (18) made of flexible material to the said support harness (1) in a removable manner and so that the opening in the container (18) made of flexible material faces the anus of the dog (30).

4. Nappy for dogs according to either of Claims 1 or 2, in which:
• the said support harness consists of a backpiece (1) made up of several straps joined together;
• the said protective cover (19) is conical in shape;
• the said container (18) made of flexible material is glued to the inside of the protective cover (19) and is of the type which folds up concertinastyle.

5. Nappy (22) for dogs according to one of the preceding claims, characterized in that it comprises:
a) a backpiece (1) made of rubber, plastic or leather;
b) a plastic ring (7) with a covering (9) of soft rubber on one side and plastic spring clips (10) with split closures on the other side, which side also has a conically tapered part (11);
c) a cardboard ring (12) with a projecting part designed to engage with the said conically tapered part (11) of the said plastic ring (7) and house the latter inside it; the external profile of the said projecting part being of complementary shape to that of the said plastic spring clips (10), in which it engages;
d) a paper container (18) which folds up concertinastyle;
e) a conical protective cover (19) made of cardboard containing the said paper container (18) and glued to the latter at its internal end;
f) a cord (17), one end of which is attached to a cardboard ring (20) and the other end of which passes through holes (18m) and is attached to a polyethylene sheet (18p) fitted over the mouth of the said paper container (18) so as to be able to close it by pulling on the said cord (17);
g) several elastic retention straps (5, 6) designed to be fastened to metal press studs (4) attached to the said backpiece (1) and to tabs (14) provided on the said plastic ring (7);
h) a strip of paper (16), the central portion of which is thinned by means of notches (16i), the ends of the strip being attached to the inside of the said conical protective cover (19) and passing through suitable holes (12q) in the said cardboard ring (12) so as to secure the latter to the abovementioned conical protective cover (19).
